# EUROPÄISCHE PATENTSCHRIFT

(11) **EP 4 076 752 B1**
(45) Veröffentlichungstag und Bekanntmachung des Hinweises auf die Patenterteilung: **15.10.2025**
(21) Anmeldenummer: 20842571.0
(22) Anmeldetag: 18.12.2020
(51) Int. Cl.: B01L 3/00, G01N 21/65, G01N 21/3577

(54) **PROBENTRÄGER ZUR ELEKTRISCHEN MANIPULATION VON FLÜSSIGEN PROBEN UND ZUR SCHWINGUNGSSPEKTROSKOPIE AN DEN PROBEN**
SAMPLE CARRIER FOR ELECTRICAL MANIPULATION OF LIQUID SAMPLES AND FOR PERFORMING VIBRATIONAL SPECTROSCOPY ON THE SAMPLES
PORTE-ÉCHANTILLON POUR MANIPULATION ÉLECTRIQUE D'ÉCHANTILLONS LIQUIDES ET POUR EFFECTUER UNE SPECTROSCOPIE VIBRATIONNELLE SUR LES ÉCHANTILLONS

(30) Priorität: 20.12.2019 DE 102019135557
(43) Veröffentlichungstag der Anmeldung: 26.10.2022
(73) Patentinhaber: Leibniz-Institut für Photonische Technologien e.V., 07745 Jena (DE); Friedrich-Schiller-Universität Jena, 07743 Jena (DE); Universitätsklinikum Jena, 07747 Jena (DE); Ernst-Abbe-Hochschule Jena University Of Applied Sciences, 07745 Jena (DE); Biophotonics Diagnostics GmbH, 07751 Jena (DE)
(72) Erfinder: WIEDE, Alexander, 07743 Jena (DE); GLASER, Uwe, 07749 Jena (DE); LEITERER, Christian, 07749 Jena (DE); NEUGEBAUER, Ute, 07743 Jena (DE); KIRCHHOFF, Johanna, 99423 Weimar (DE); POPP, Jürgen, 07751 Jena (DE); WEBER, Jörg, 07751 Jena (DE)
(74) Vertreter: Maiwald GmbH
(86) Internationale Anmeldenummer: PCT/EP2020/087158
(87) Internationale Veröffentlichungsnummer: WO 2021/123259

(56) Entgegenhaltungen:
- WO-A2-2018/200995
- US-A1- 2002 150 933
- US-A1- 2006 006 061
- US-A1- 2019 137 437
- US-A1- 2019 162 655

## Beschreibung

### Technisches Gebiet

Die Erfindung betrifft ein Verfahren zur Herstellung eines Probenträgers und einen Probenträger zur elektrischen Manipulation von flüssigen Proben und zur Schwingungsspektroskopie an den Proben. Ferner betrifft die Erfindung ein System zur Schwingungsspektroskopie, welches einen Probenträger und ein Schwingungsspektroskop aufweist.

### Hintergrund der Erfindung

Bei der Untersuchung von Zellen, insbesondere Bakterien und/oder Viren werden sogenannte Bio-Assays oder Lab-On-A-Chips verwendet. Diese Untersuchung basiert auf einer elektrischen Manipulation der Zellen auf/in einem Mikrofluidsystem, insbesondere einem Mikrofluidchip, welcher zur Schwingungsspektroskopischen Untersuchung geeignet ist. Besonders finden dielektrophoretische Chips zur Raman-spektroskopischen Untersuchung Anwendung.

Bisher werden diese Chips auf individueller Basis produziert und bestehen aus einem planaren Substrat auf welchem mittels lithografischen Verfahren Elektroden aufgebracht werden. Auf dieses Substrat wird ein Polymer-Block, insbesondere Polydimethylsiloxan (PDMS)-Block, aufgelegt, welcher als Mikrofluidkammer für die Proben dient. Zur Ansteuerung der Elektroden auf der Substratschicht, wird die Substratschicht mit dem PDMS-Block auf einer Leiterplatte angebracht und mit dieser elektrisch verbunden. Beispiele für derartige Geräte sind US 2019/162655 A1 und WO 2018/200995 A2.

Die Anzahl der verfügbaren Elektroden wird in dieser Konfiguration durch die Größe des Substrates festgelegt. Somit ist es von dem Substrat abhängig, wie viele Probenkammern in dem PDMS-Block mittels Elektroden angesteuert werden können. Die interne Herstellung des Bio-Assays hat hohe Produktionskosten zur Folge und kann nicht in Großserien gefertigt werden. Ferner kann es bei der Verwendung des PDMS-Blockes als Probenkammer zu Kreuzkontaminationen zwischen einzelnen Probenkammern des PDMS-Blockes kommen, da ein Halt des PDMS-Blockes auf dem Substrat vorwiegend über dessen hydrophobe Eigenschaften realisiert wird. Die Erfinder der vorliegenden Erfindung haben festgestellt, dass dadurch der bisherige Bio-Assay unzuverlässig und fehleranfällig ist, was eine kommerzielle Anwendung erschwert.

### Darstellung der Erfindung

Es ist eine Aufgabe der vorliegenden Erfindung, die vorgenannten Ansätze weiterzuentwickeln und dadurch die Untersuchung der Zellen, insbesondere die Untersuchung von Bakterien und Viren und deren Reaktion auf Antiinfektiva zu verbessern. Insbesondere ist es eine Aufgabe der vorliegenden Erfindung einen verbesserten Probenträger, i.e. Bio-Assay zur besseren Raman-Spektroskopischen Untersuchung von Antibiotikaresistenzen bereitzustellen.

Diese Aufgabe wird erfindungsgemäß gelöst durch einen Probenträger gemäß Anspruch 1 und durch ein Verfahren zur Herstellung des Probenträgers gemäß Anspruch 15 und durch ein System gemäß Anspruch 14. Weitere vorteilhafte Ausgestaltungen ergeben sich aus den darauf rückbezogenen Unteransprüchen.

Ein erster Aspekt der Erfindung betrifft einen Probenträger zur elektrischen Manipulation von flüssigen Proben und zur Schwingungsspektroskopie an den Proben. Der Probenträger weist eine Substratschicht und eine Leiterplatte auf, wobei die Leiterplatte auf der Substratschicht angeordnet ist. Die Substratschicht weist mehrere Elektroden zur elektrischen Manipulation von flüssigen Proben auf, wobei die Leiterplatte elektrische Zuleitungen zu den Elektroden der Substratschicht aufweist, und wobei die Leiterplatte mehrere Ausnehmungen aufweist, die jeweils zusammen mit der Substratschicht eine Probenkammer bilden,wobei die Elektroden konfiguriert sind zum Generieren eines inhomogenen elektrischen Feldes zur Dielektrophorese.

Ein zweiter Aspekt der Erfindung umfasst ein System zur Schwingungsspektroskopie aufweisend ein Schwingungs-Spektroskop und einen erfindungsgemäßen Probenträger. Ein dritter Aspekt der Erfindung betrifft ein Verfahren zur Herstellung eines Probenträgers zur elektrischen Manipulation von flüssigen Proben und zur Schwingungsspektroskopie an den Proben. Das Verfahren umfasst das Bereitstellen einer Substratschicht, das Aufbringen von mehreren Elektroden zur elektrischen Manipulation von flüssigen Proben auf die Substratschicht, Bereitstellen einer Leiterplatte, Aufbringen von elektrischen Zuleitungen zu den Elektroden der Substratschicht auf die Leiterplatte, Ausbilden von mehreren Ausnehmungen auf der Leiterplatte, Anordnen der Leiterplatte auf der Substratschicht, wobei die Ausnehmungen jeweils zusammen mit der Substratschicht eine Probenkammer bilden. bilden, wobei die Elektroden konfiguriert sind zum Generieren eines inhomogenen elektrischen Feldes zur Dielektrophorese.

Unter einem Probenträger kann insbesondere ein Gefäß zur Aufnahme von flüssigen Proben verstanden werden, wobei an und/oder auf dem Probenträger verschiedene bauliche Merkmale zur Analyse dieser flüssigen Proben vorgesehen sind, wie im Folgenden weiter erläutert werden wird. Der Probenträger ist dazu geeignet in einer Schwingungsspektroskopischen Messeinrichtung eingebracht zu werden. Ferner ist der Probenträger derart ausgeführt, dass er eine Mehrzahl an flüssigen Proben aufnehmen kann, sodass es möglich ist diese Mehrzahl an flüssigen Proben mittels eines Schwingungsspektroskops zu analysieren. Der Probenträger kann auch als Bio-Assay bezeichnet werden. In seinem Grundaufbau umfasst der Bio-Assay einen Mikrofluidchip, welcher eine Probenmanipulation mittels Dielektrophorese ermöglicht, wie im Folgenden, insbesondere im Kontext verschiedener Ausführungsbeispiele beschrieben werden wird.

Unter der elektrischen Manipulation kann eine elektrokinetische Manipulation verstanden werden. Insbesondere kann darunter eine Manipulation auf Basis von Dielektrophorese verstanden werden. Bei der Dielektrophorese wird ein inhomogenes elektrisches Feld zur Manipulation von Teilchen verwendet. In den Teilchen wird durch das inhomogene elektrische Feld ein Dipolmoment induziert, das in Wechselwirkung mit dem angelegten Feld tritt. Die Teilchen erfahren somit eine Kraft und bewegen sich in Abhängigkeit des Feldes und des Dipolmomentes in Bereiche hoher oder niedriger Feldstärke. Die Kraftwirkung verhält sich proportional zum Volumen der Teilchen. Somit können Teilchen auch in Abhängigkeit von ihrer Größe eingefangen werden. Die Dielektrophorese dient unter anderem zur Detektion und zur Sortierung von Bakterien und Viren innerhalb des Probenträgers. In komplexen flüssigen Proben, wie z.B. Speichel, Urin oder Blut müssen die Bakterien erst von anderen Teilen der flüssigen Probe getrennt werden, da diese anderen Teile die Identifikation der Bakterien erschwert. Die Bakterien werden mittels der Dielektrophorese gefangen und festgehalten und damit der Untersuchung zugänglich gemacht. Dadurch können die Bakterien direkt in der flüssigen Probe in der sie enthalten sind vermessen werden. Die zuvor beschriebenen Verfahrensschritte und korrespondierende baulichen Einschränkungen sind daher als Teil von Ausführungsformen der Erfindung anzusehen.

Unter der Schwingungsspektroskopie kann eine analytische Messmethode verstanden werden, welche auf einer Anregung der Normalschwingungen von Molekülen basiert. Methoden der Schwingungsspektroskopie sind die Infrarotspektroskopie und die Ramanspektroskopie. Die Schwingungsspektroskopie wird zum Beispiel zur Charakterisierung von Verbindungen benutzt, dabei wird sie verwendet zur Identifizierung bereits bekannter Verbindungen, Bestimmung von Komponenten einer unbekannten Verbindung, Bestimmung einer Struktur einer Verbindung, Bestimmen von Konzentrationsänderungen von Komponenten während einer Reaktion, Bestimmen von Bindungseigenschaften, und Bestimmen von organischen und anorganischen Substanzen, insbesondere Molekülen. Insbesondere kann sie verwendet werden zur Identifizierung von Bakterien und deren Reaktion auf Antibiotika. Ein Spektrum eines Bakteriums ist ausreichend zur Identifikation dieses Bakteriums. Insbesondere verfügt jede Bakterienspezies eine individuelle Raman-Signatur. Beispielsweise, werden bei der Raman-spektroskopischen Untersuchung zur Bestimmung der Anfälligkeit bzw. Resistenz der Bakterien gegenüber Antibiotika die Wachstumskurven der Bakterien unter Antibiotikumeinfluss vermessen. Die zuvor beschriebenen Verfahrensschritte und korrespondierende baulichen Einschränkungen sind daher als Teil von Ausführungsformen der Erfindung anzusehen.

Ferner können die Teilchen bzw. Zellen in dem Probenträger auch für Fluoreszenzuntersuchungen oder für allgemeine morphologische Untersuchungen verwendet werden.

Unter den flüssigen Proben können insbesondere flüssige Medien verstanden werden, welche zu untersuchende Zellen, insbesondere Bakterien und/oder Viren enthalten. Dabei können Bakterien in dem Probenträger innerhalb der flüssigen Proben kultiviert werden und danach direkt in dem Probenträger analysiert werden. Alternativ können die flüssigen Proben extern entnommen werden, wie z.B. Blut, Urin, Speichel, und anschließend in/auf den Probenträger zur Untersuchung aufgebracht werden. Beispielsweise können verschiedene Antibiotika in die Probenkammern in verschiedener Konzentration vorliegen, in welche die Probe zugegeben wird um anschließen die Reaktion der Probe auf die verschiedenen Konzentrationen oder verschiedenen Antibiotika zu untersuchen.

Der Probenträger weißt eine Substratschicht und eine Leiterplatte auf. Unter der Substratschicht kann jedes Material verstanden werden, welches für Schwingungsspektroskopische Untersuchungen durchlässig ist. Insbesondere ist die Substratschicht eine transparente Substratschicht, welche aus Kunststoff und/oder Glas besteht. Je nach ausgewähltem Substratmaterial erfolgt eine Korrektur der entstehenden Hintergrundsignale während der Datenauswertung der Probe oder das Spektralband des Substrates unterscheidet sich in der Wellenzahl ausreichend von dem Spektralband der Probe. Vorzugsweise handelt es sich um eine einzelne Substratschicht bestehend aus ein und demselben Material.

Unter der Leiterplatte kann eine einschichtige oder mehrschichtige Struktur verstanden werden, welche als Träger von elektrisch leitenden Strukturen und gleichzeitig als Probenaufnahmegefäß dient. Bei der Leiterplatte kann es sich um eine handelsübliche Leiterplatte handeln, welche elektrisch isolierendes Material und elektrisch leitendes Material umfasst. Durch das Verwenden einer Leiterplatte in dem Probenträger, kann die Herstellung dieser industriell einfach, in großer Stückzahl, präzise, automatisiert und kosteneffizient geschehen. Die Leiterplatte kann im Gegensatz zu einem PDMS-Block in Großserien gefertigt werden und eignet sich somit besonders zur Kommerzialisierung. Weiterhin wird der Montageprozess durch einfache Montageschritte und durch handelsübliche Befestigungen an der Leiterplatte vereinfacht. Durch die Verwendung der Leiterplatte können die bisherigen Bonddrähte, welche den PDMS-Block mit dem Substrat und einer weiteren Leiterplatte verbinden, vermieden werden und somit könne zuverlässigere und länger haltbarere Bauteile (als Bonddrähte) verwendet werden.

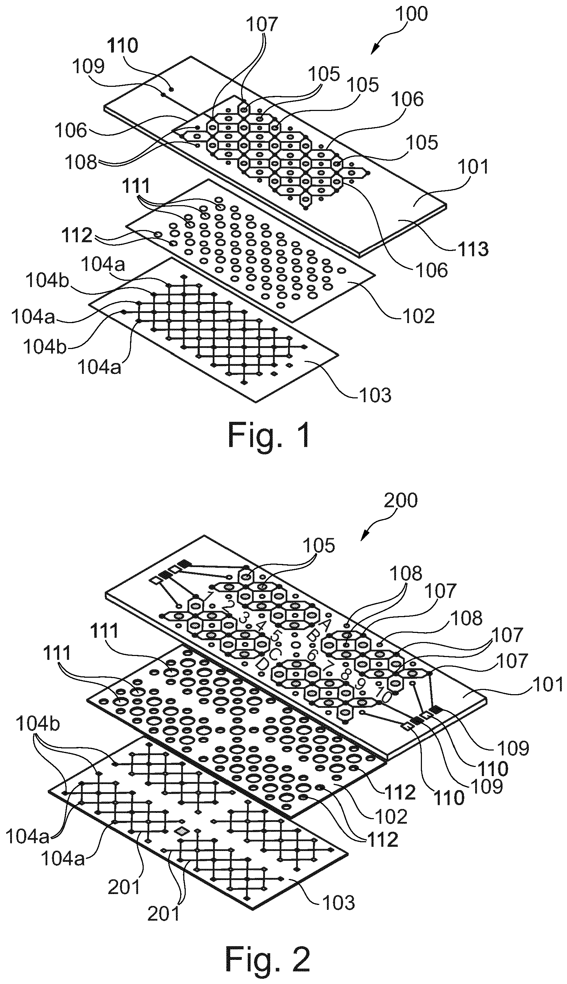

Die Leiterplatte wird auf der Substratschicht angeordnet, sodass die oberste Schicht des Probenträgers die Leiterplatte darstellt. Die Ausnehmungen auf der Leiterplatte erstrecken sich durch die Leiterplatte zumindest bis zur Substratschicht, sodass die Ausnehmungen für das Einbringen von flüssigen Proben zugänglich sind. Dies kann beispielhaft den Ausführungen der Figur 1 entnommen werden. Die Ausnehmungen in der Leiterplatte können als Durchgangslöcher ausgebildet sein. Dies ermöglicht eine einfache Herstellung der Ausnehmungen. Die Ausnehmungen bilden jeweils zusammen mit der Substratschicht eine Probenkammer, das heißt es befinden sich bevorzugt mehrere Probenkammern auf dem Probenträger. Die Anzahl der Probenkammern, auch Wells genannt, kann bevorzugt in einem Bereich von 1 bis 1600 Probernkammern liegen. Insbesondere liegt die Anzahl der Probenkammern in einem Bereich von 6 bis 1536. Vorzugsweise umfasst der Probenträger 384 Probenkammern, in einer 16 mal 24 Anordnung, gemäß einem Standard 354 Well-Plate-Format. Die dichtere Leitungsführung, der Zuleitungen, ermöglicht eine Erhöhung der Anzahl der Probenkammern pro Fläche, da die Leitungsführung von der Substratschicht auf die Leiterplatte verlagert werden kann und auf der Substratschicht mehr Elektroden bzw. Elektrodenstrukturen zur Ansteuerung der Probenkammern bereitgestellt werden können.

Gemäß einer exemplarischen Ausführungsform der Erfindung erstrecken sich die Ausnehmungen sowohl durch die Leiterplatte und zumindest teilweise durch das Substrat, sodass das Substrat auch Ausnehmungen aufweist, die jeweils den Ausnehmungen der Leiterplatte zugeordnet sind und mit diesen jeweils eine Probenkammer darstellen. Dies ermöglicht eine Erhöhung des Probevolumens.

Dadurch das eine Leiterplatte gleichzeitig zur Bereitstellung von elektrischen Zuleitungen und Bereitstellung von Probekammern dient kann eine höhere Probenkammeranzahl umgesetzt werden, dies kann beispielhaft dem Ausführungsbeispiel der Figur 2 entnommen werden. Es besteht keine Einschränkung mehr bezüglich der Elektrodenanzahl, da die elektrischen Zuleitungen auf der Leiterplatte angeordnet werden können und nicht mehr nur auf der Substratschicht. Durch den Einsatz der Leiterplatte wird der Probenträger insgesamt günstiger in seiner Herstellung und eignet sich durch diese Konstruktion nun für die Herstellung in Großserien. Dadurch wird der Probenträger bzw. der Bio-Assay kostengünstiger. Ferner ist es nun möglich, dass auf der Substratschicht mehr Elektroden angeordnet werden können, da die Zuleitungen auf der Substratschicht entfallen können und auf der Leiterplatte angeordnet werden. Somit können auf der Substratschicht mehr und auch unterschiedliche Elektrodenstrukturen realisiert werden.

Gemäß einer exemplarischen Ausführungsform der Erfindung weist die Leiterplatte eine erste Hauptoberfläche und eine zweite Hauptoberfläche auf, wobei die erste Hauptoberfläche gegenüberliegend der zweiten Hauptoberfläche angeordnet ist, und wobei die elektrischen Zuleitungen der Leiterplatte zu den Elektroden der Substratschicht sowohl auf der ersten Hauptoberfläche als auch auf der zweiten Hauptoberfläche angeordnet sind.

Durch die Verwendung einer Leiterplatte ist es möglich die Anzahl an elektrischen Verbindungen, insbesondere die Zuleitungen, zu erhöhen in dem diese auf mehreren, d.h. auf der ersten und der zweiten Hauptoberfläche angeordnet werden. Dadurch können mehr Elektroden zur Untersuchung verwendet werden, was gleichzeitig eine Erhöhung der zu untersuchenden Proben zur Folge hat. Die erste Hauptoberfläche und die zweite Hauptoberfläche erstrecken sich in eine Richtung senkrecht zu einer Richtung in welcher die Schichten des Probenträgers aufeinandergestapelt werden. Je nach Ausführungsform sind die Zuleitungen nur auf der ersten Hauptoberfläche oder nur auf der zweiten Hauptoberfläche angeordnet, oder die erste Hauptoberfläche weist mehr Zuleitungen als die zweite Hauptoberfläche auf oder genau anders herum. Weiterhin können die erste und die zweite Hauptoberfläche die gleiche Anzahl an Zuleitungen aufweisen. Die Anzahl der Zuleitungen richtet sich nach der Anzahl der anzusteuernden Elektroden. Insbesondere ist für jede Elektrode eine Zuleitung vorgesehen. Zusätzlich können auf der ersten Hauptoberfläche und/oder auf der zweiten Hauptoberfläche Zuleitungen für eine Einspeisung von elektrischer Energie, Strom und/oder Spannung, vorgesehen sein.

Gemäß einer exemplarischen Ausführungsform der Erfindung besteht die Substratschicht aus Glas, auf oder in dem die Elektroden angeordnet sind.

Die Elektroden können mittels eines lithografischen Verfahrens auf oder in die Substratschicht aufgebracht werden. Die Anzahl der Elektroden richtet sich dabei nach der Anzahl der Probenkammern, sodass für jede Probenkammer eine entsprechende Elektrode und/oder Elektrodenformation vorgesehen ist. Wird die Substratschicht aus Glas ausgebildet kann der Probenträger für die Schwingungsspektroskopische Untersuchung verwendet werden.

Gemäß einer exemplarischen Ausführungsform der Erfindung, ist das Glas ein Quarzglas.

Quarzglas hat den Vorteil, dass es aus reinem Siliziumdioxid besteht und keine Beimengungen, im Gegensatz zu anderen Glassorten, aufweist, welche störende Banden erzeugen können und somit die Schwingungsspektroskopie beeinflussen würden. Wird ein anderes transparentes Material verwendet ist eine Aufarbeitung der Ergebnisse notwendig um Fehler, entstanden durch z.B. Streuungen im Material durch die Einschlüsse, heraus zu filtern. Diese Fehler können bei der Verwendung von Quarzglas fast vollständig vermieden werden.

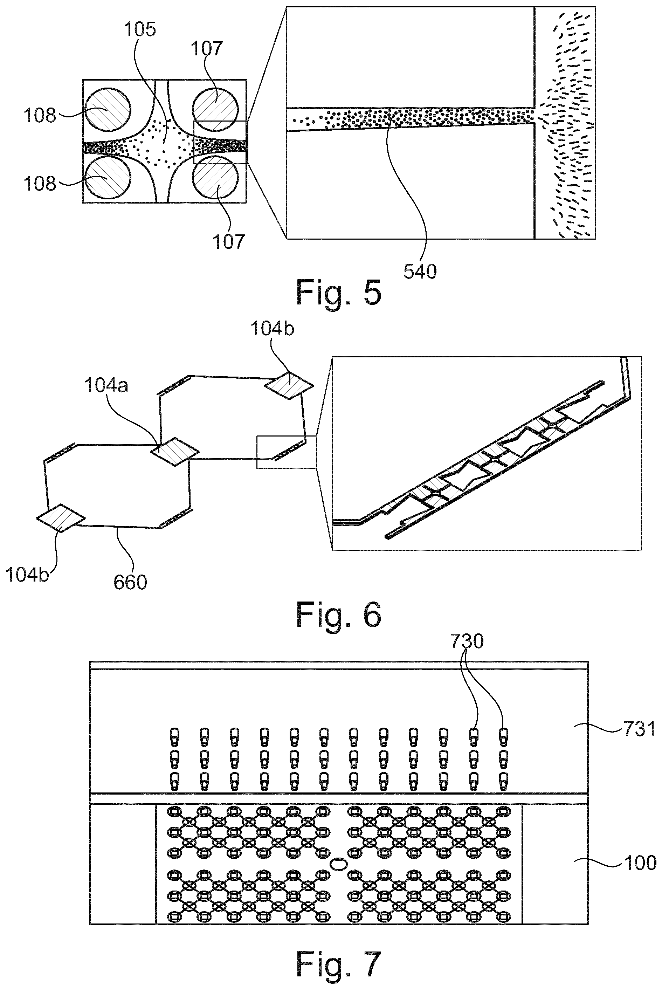

Gemäß einer exemplarischen Ausführungsform der Erfindung sind die Elektroden der Substratschicht als Duopol, Tripol, und/oder Quadrupol und zur dielektrophoretischen Manipulation der Proben in den Probenkammern ausgeführt. Eine Quadrupol Anordnung kann beispielsweise der Ausführungsform der Figur 5 entnommen werden. Für die verschiedenen Elektroden-Pol Anordnungen werden, abwechselnd gepolte Elektroden verwendet. Insbesondere werden für einen Quadrupol zwei Elektroden zur Erzeugung von elektrisch positiver Ladung und zwei Elektroden zur Erzeugung von elektrisch negativer Ladung abwechselnd angeordnet. Durch die Anordnung von unterschiedlich gepolten Elektroden kann die flüssige Probe in den Probenkammern dielektrisch beeinflusst werden.

Gemäß einer exemplarischen Ausführungsform der Erfindung ist pro Probenkammer je ein Duopol, Tripol, oder Quadrupol an Elektroden auf der Substratschicht angeordnet. Somit sind für eine Mehrzahl an Probenkammer eine Mehrzahl an Duopolen, Tripolen, oder Quadrupolen an Elektroden auf der Substratschicht angeordnet. Die Anzahl der Duopole, Tripole, oder Quadrupole richtet sich dabei nach der Anzahl der Probenkammern.

Gemäß einer exemplarischen Ausführungsform der Erfindung ist ein Volumen jeder Probenkammer im Bereich von 0,5 bis 50 µl. Insbesondere ist das Volumen jeder Probenkammer im Bereich von 0,5 bis 30 µl, insbesondere im Bereich von 0,5 bis 10 µl, insbesondere von 0,5 bis einschließlich 5 µl. Je kleiner das Volumen der Probenkammer ist, umso mehr Probenkammern kann die Leiterplatte umfassen und umso mehr Proben können analysiert werden. Gemäß einer exemplarischen Ausführungsform können die Probenkammern unterschiedliche Volumina aufweisen.

Gemäß einer exemplarischen Ausführungsform der Erfindung ist zwischen der Leiterplatte und der Substratschicht eine Verbindungsschicht angeordnet. Die Verbindungsschicht ist konfiguriert die Leiterplatte mit der Substratschicht zu verbinden. Die Verbindungsschicht kann sich teilweise oder vollständig zwischen der Substratschicht und der Leiterplatte erstrecken. Die Verbindungsschicht kann die Substratschicht mit der Leiterplatte punktuell, d.h. an einzelnen Positionen, oder über die ganze Oberfläche der Substratschicht und der Leiterplatte miteinander verbinden. Die Verbindungsschicht kann sich beispielsweise nur entlang der äußeren Schichtränder zwischen der Substratschicht und der Leiterplatte erstrecken, in der Art, dass die Verbindungsschicht einen Verbindungsschichtfreien Raum umschließt, welcher die Probenkammern umfassen kann. Ferner kann die Verbindungsschicht lediglich an einzelnen Positionen zwischen der Substratschicht und der Leiterplatte vorgesehen sein. Beispielsweise ist die Verbindungsschicht nur an den äußeren Ecken zwischen der Substratschicht und der Leiterplatte angeordnet. Die Verbindungsschicht kann dabei derart ausbildet sein, dass sie die Probenkammer zwischen Substratschicht und Leiterplatte abdichtet, sodass keine Kreuzkontamination zwischen den einzelnen Probenkammern entstehen.

Gemäß einer exemplarischen Ausführungsform der Erfindung ist die Verbindungsschicht eine Klebeschicht, wobei die Klebeschicht Ausnehmungen aufweist und wobei pro Ausnehmung der Leiterplatte je eine Ausnehmung der Klebeschicht angeordnet ist. Insbesondere ist die Verbindungsschicht eine zweiseitige Klebefolie.

Gemäß einer weiteren exemplarischen Ausführungsform der Erfindung ist die Verbindungsschicht eine magnetische Schicht, in der Art, dass die Substratschicht und die Leiterplatte magnetisch miteinander verbunden werden.

Gemäß einer exemplarischen Ausführungsform der Erfindung bilden die Ausnehmungen der Klebeschicht jeweils zusammen mit einer Ausnehmung der Leitplatte und der Substratschicht eine Probenkammer. In anderen Worten erstreckt sich die Probenkammer sowohl durch die Leiterplatte als auch durch die Klebeschicht, sodass eine Schwingungsspektroskopie der flüssigen Probe ermöglicht werden kann. Die Ausnehmungen der Klebeschicht sind dabei den Ausnehmungen der Leiterplatte zugeordnet, d.h. jeder einzelnen Ausnehmung der Leiterplatte ist eine Ausnehmung der Verbindungsschicht zugeordnet, wobei die Ausnehmungen der Klebeschicht in ihrer Form der Form der Ausnehmungen der Leiterplatte entsprechen.

Gemäß einer exemplarischen Ausführungsform der Erfindung weist die Substratschicht mehrere Zuleitungen zu den Elektroden auf. Die elektrischen Zuleitungen können somit sowohl auf der Substratschicht, als auch auf der Leiterplatte angeordnet werden. Damit wird die Anzahl der Zuleitungen erhöht und es können mehr Elektroden angesteuert werden. Es können somit verschiedene Elektrodenstrukturen gebildet werden, welche unterschiedlich angesteuert werden können. Die zu analysierende Probenanzahl kann somit ebenfalls erhöht werden.

Gemäß einer exemplarischen Ausführungsform der Erfindung sind die Elektroden der Substratschicht zumindest teilweise übereinander angeordnet. Dabei kann eine Isolationsschicht zwischen den übereinander angeordneten Elektroden zur Isolation der Elektroden voneinander angeordnet sein, und ferner können die elektrischen Zuleitungen zumindest teilweise auf der Substratschicht angeordnet sein. Gemäß dieser Ausführungsform, weist die Substratschicht eine Mehrzahl von Elektroden auf, welche übereinander auf einer Seite der Substratschicht angeordnet sind. Die Mehrzahl von Elektroden können in mehreren Schichten auf einer Seite der Substratschicht angeordnet werden, wobei die Elektrodenschichten direkt übereinander angeordnet und/oder auch versetzt übereinander angeordnet sind, in Abhängigkeit der gewählten Elektrodenformation. Die Elektroden sind insbesondere auf einer Seite der Substratschicht angeordnet, welche der Leiterplatte zugewandt ist, sodass die Elektroden bzw. die Elektrodenschichten sich zwischen der Substratschicht und der Leiterplatte befinden. Alternativ oder zusätzlich können die Elektroden auch auf der Seite der Substratschicht angeordnet werden, welche von der Leiterplatte abgewandt ist. Ferner kann diese Ausführungsform eine zusätzliche Schicht zwischen den übereinander angeordneten Elektroden auf der Substratschicht enthalten, wobei diese Schicht als eine Isolationsschicht und/oder Passivierungsschicht konfiguriert ist. Durch diese Isolationsschicht können die übereinanderliegenden Elektrodenstrukturen direkt übereinander angeordnet werden, sodass eine Kreuzung und ein Kurzschluss der verschiedenen Elektrodenstrukturen vermieden werden kann. In einer exemplarischen Ausführungsform kann die in den anderen Ausführungsformen beschriebene Verbindungsschicht beispielsweise als die Isolationsschicht verwendet werden oder die Isolationsschicht ist eine zusätzliche Schicht zwischen der Leiterplatte und der Substratschicht, insbesondere zwischen der Verbindungsschicht und der Substratschicht. Die Isolationsschicht kann beispielsweise nur teilweise zwischen den übereinander angeordneten Elektrodenstrukturen aufgebracht werden, sodass sich die Isolationsschicht lediglich zwischen den Elektrodenstrukturen befindet, welche sich kreuzen bzw. überschneiden würden. Mittels der Anordnung der Elektrodenstrukturen, können ebenfalls eine Vielzahl von elektrischen Zuleitungen auf die Substratschicht verlagert werden, sodass die Anzahl der elektrischen Zuleitungen und Durchgangslöcher auf der Leiterplatte verringert werden. Auf der Leiterplatte können gemäß dieser Ausführungsform die restlichen elektrischen Zuleitungen an den Rand der Leiterplatte verlagert werden, sodass beispielsweise nur noch elektrische Zuleitungen und elektrische Kontakte zur elektrischen Kontaktierung des Probenträgers in ein Analysesystem, z.B. zu einem Frequenzgenerator notwendig sind. Eine Kombination dieser exemplarischen Ausführungsform ist mit allen weiteren beschriebenen Ausführungsformen möglich.

Gemäß einer exemplarischen Ausführungsform der Erfindung erstrecken sich die elektrischen Zuleitungen der Leiterplatte zumindest teilweise durch die Leiterplatte. Insbesondere erstrecken sich die elektrischen Zuleitungen auf der ersten Hauptoberfläche durch die Leiterplatte zu der zweiten Hauptoberfläche. In dieser Ausführungsform stellt die erste Hauptoberfläche eine Oberfläche dar, welche sich auf der von der Substratschicht abgewandten Seite der Leiterplatte befindet. Die elektrischen Zuleitungen auf der zweiten Hauptoberfläche können beispielsweise direkt mit den Elektroden der Substratschicht in elektrischen Kontakt gebracht werden, da sich diese nicht durch die Leiterplatte erstrecken müssen. Alternativ können sich die elektrischen Zuleitungen auf der zweiten Hauptoberfläche innerhalb der Leiterplatte erstrecken, sodass auf der zweiten Hauptoberfläche keine Erhebungen aufgrund von Zuleitungen vorliegen. Es wird somit eine planare zweite Hauptoberfläche der Leiterplatte gebildet, welche einen direkten und sicheren Kontakt mit der Substratschicht und/oder mit der Verbindungsschicht eingehen kann. Indem sich die elektrischen Zuleitungen durch die Leiterpatte erstrecken können Bonddrähte vermieden werden und eine direkte Kontaktierung der Leiterplatte und der Substratschicht wird bereitgestellt. Damit wird der Probenträger in seiner Anwendung zuverlässiger.

Gemäß einer exemplarischen Ausführungsform der Erfindung weist die Leiterplatte mehrere Durchgangslöcher für die elektrischen Zuleitungen auf, wobei sich die elektrischen Zuleitungen durch die Durchgangslöcher zu den Elektroden der Substratschicht erstrecken. Insbesondere erstrecken sich die Durchgangslöcher von der ersten Hauptoberfläche durch die Leiterplatte zu der zweiten Hauptoberfläche der Leiterplatte. Die Durchgangslöcher können gemäß einer Ausführungsform Innenwände aufweisen, welche mit elektrisch leitfähigem Material beschichtet sind. Dadurch kann eine elektrische Verbindung mittels der Durchgangslöcher besser bereitgestellt werden. So kann beispielsweise Leitpaste, insbesondere Leitsilber zur Kontaktierung verwendet werden, welches in die Durchgangslöcher eingebracht wird. Die Zuleitungen werden somit durch die Durchgangslöcher mittels Leitpaste realisiert.

Gemäß einer exemplarischen Ausführungsform werden die elektrischen Zuleitungen gebildet von zumindest einem von einem elektrisch leitfähigen Medium, elektrisch leitfähiger Folie, elektrisch leitfähigem Lack, elektrisch leitfähigem Steckverbinder, und einer elektrisch leitfähiger Klemmverbindung. Das elektrisch leitfähige Medium kann beispielsweise ein Leitsilber sein, welches in die entsprechenden Durchgangslöcher für die Zuleitungen gefüllt wird, die Folien können beispielsweise leitfähige Klebefolien sein. Die genannten elektrischen Zuleitungen können dazu verwendet werden eine elektrische Kontaktierung zwischen der Substratschicht und der Leiterplatte herzustellen. Alternativ können diese Varianten der elektrischen Zuleitungen auch zur Kontaktierung der Leiterplatte mit einem externen System, wie einem Frequenzgenerator verwendet werden. Ferner können zur Kontaktierung der Leiterplatte mit einem externen System Kontaktpads auf der Leiterplatte und/oder der Substratschicht vorgesehen werden. Dabei können zur Kontaktierung beispielsweise Federkontaktstifte oder andere leitfähige Federelemente verwendet werden. Die Kontaktpads können auf der Unter- und/oder auf der Oberseite der Leiterplatte angeordnet werden. Alternativ oder zusätzlich können auch Kontaktierungsports auf der Leiterplatte angeordnet werden zur Verbindung mit z.B. einem Frequenzgenerator, wobei eine Steckverbindung zwischen der Leiterplatte und dem Funktionsgenerator hergestellt wird.

Gemäß einer weiteren exemplarischen Ausführungsform kann eine elektrische Verbindung bzw. Kontaktierung zwischen der Substratschicht und einem externen System, wie dem Funktionsgenerator, hergestellt werden. Zum einen kann sich die Substratschicht in einer Richtung senkrecht zu einer Schichtrichtung der Substratschicht und der Leiterplatte, über die Leiterplatte hinaus erstrecken. Mit anderen Worten, die Substratschicht erstreckt sich zumindest teilweise auf einer Seite in einer Richtung senkrecht zur Schichtrichtung über die Leiterplatte hinaus und/oder die Substratschicht ist in dieser Richtung größer als die Leiterplatte. An dem sich über die Leiterplatte hinaus erstreckenden Bereich der Substratschicht können entsprechende freistehende Kontaktpads vorgesehen sein, um eine Kontaktierung mittels der in den anderen Ausführungsformen beschriebenen Varianten bereitzustellen. An diese Kontaktpads kann stoffschlüssig ein Kontakt, wie über eine flexible Leiterplatte (z.B. eine Folie mit applizierten Leiterbahnen), zu einer Spannungsquelle hergestellt werden. Zum anderen kann mittels Federkontaktstiften direkt auf der Substratschicht eine Kontaktierung hergestellt werden.

Ferner weißt auch die Verbindungsschicht Löcher und/oder Durchgangslöcher auf, sodass sich die elektrischen Zuleitungen durch die Durchgangslöcher der Verbindungsschicht erstrecken, wenn die Verbindungsschicht zwischen der Substratschicht und der Leiterplatte angeordnet ist.

Gemäß einer exemplarischen Ausführungsform der Erfindung überschneiden sich die elektrischen Zuleitungen bei der Verwendung der Elektroden als Duopol, Tripol, und/oder Quadrupol in einer Richtung senkrecht zu einer Schichtrichtung der Substratschicht und der Leiterplatte nicht. Damit wird gewährleistet, dass die unterschiedlichen Potentiale der Elektroden sich nicht gegenseitig beeinflussen und ein zuverlässiges inhomogenes Feld für die Dielektrophorese angelegt werden kann. Unter dem Begriff Schichtrichtung kann eine Richtung verstanden werden, in welcher die Leiterplatte und Substratschicht und die Verbindungsschicht aufeinandergeschichtet bzw. gestapelt werden.

Gemäß einer exemplarischen Ausführungsform der Erfindung weißt der Probenträger ferner eine Abdichtung auf, welche auf der Leiterplatte angeordnet. Mittels dieser Abdichtung werden die Probenkammern abgedeckt. Insbesondere wird die Abdichtung auf der ersten Hauptoberfläche der Leiterplatte angeordnet. Die Abdichtung dichtet jede Probenkammer einzeln ab, sodass durch die Abdichtung eine Kontamination durch äußere Einflüsse vermieden werden kann. Ferner kann der Benutzer des Probenträgers durch die Abdichtung vor einer infektiösen Probe geschützt werden. Insbesondere ist die Abdichtung abnehmbar ausgebildet, sodass sie vor und nach und/oder während der Spektroskopischen Untersuchung entfernt oder aufgelegt werden kann. Dies ist beispielsweise zum Schutz vor der Toxizität der Antibiotika bei einer Bakteriophagen Probe zu beachten.

Gemäß einer exemplarischen Ausführungsform der Erfindung weist das System einen Detektor zur Schwingungsspektroskopie auf, wobei der Detektor auf einer der Leiterplatte gegenüberliegenden Seite der Substratschicht angeordnet ist. Mit anderen Worten ist der Detektor unterhalb des Probenträgers, auf der Seite der Substratschicht angeordnet. Auf der Oberseite des Probenträgers ist das Schwingungsspektroskop des Systems angeordnet. Vorzugsweise ist der Detektor eingerichtet zum Durchführen von Ramanspektroskopie und/oder Infrarotspektroskopie.

Gemäß einer exemplarischen Ausführungsform sind sowohl der Detektor als auch das Schwingungsspektroskop auf einer der Leiterplatte gegenüberliegenden Seite der Substratschicht angeordnet. Das heißt Detektor und Schwingungsspektroskop sind auf ein und derselben Seite angeordnet. Beispielsweise wird die Probe bei einem inversen Ramanspektrometer von unten durch einen Laserstrahl, ausgestrahlt von einem Objektiv, angeregt. Einige der ausgestrahlten Photonen werden in das Objektiv zurückgestrahlt, werden anschließend von einem Strahlteiler abgelenkt, passieren ein Gitter und werden von einem Detektor, beispielsweise ein CCD-Detektor, detektiert.

Gemäß einer exemplarischen Ausführungsform der Erfindung weist das Verfahren ferner ein Bereitstellen einer Verbindungsschicht und Anordnen der Verbindungsschicht zwischen der Substratschicht und der Leiterplatte auf. Insbesondere wird die Verbindungsschicht zwischen der Substratschicht und der Leiterplatte derart angeordnet, dass diese mechanisch miteinander verbunden werden. Weiterhin kann die Verbindungsschicht dazu dienen die Probenkammern abzudichten.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben, ohne dass der Gegenstand der Erfindung hierdurch beschränkt wird. Es zeigen:
Fig. 1 zeigt einen Probenträger gemäß einer exemplarischen Ausführungsform der Erfindung.
Fig. 2 zeigt einen Probenträger gemäß einer exemplarischen Ausführungsform der Erfindung.
Fig. 3 zeigt eine Probenkammer eines Probenträgers gemäß einer exemplarischen Ausführungsform der Erfindung.
Fig. 4 zeigt ein System zur Schwingungsspektroskopie umfassend einen Probenträger gemäß einer exemplarischen Ausführungsform der Erfindung.
Fig. 5 zeigt eine Duopol-Anordnung und eine Probenkammer gemäß einer exemplarischen Ausführungsform der Erfindung.
Fig. 6 zeigt eine Duopol-Anordnung gemäß einer exemplarischen Ausführungsform der Erfindung.
Fig. 7 zeigt ein Pin-Array zum Kontaktieren eines Probenträgers gemäß einer exemplarischen Ausführungsform der Erfindung.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch und nicht maßstabsgetreu.

Figur 1 illustriert einen Probenträger 100 zur elektrischen Manipulation von flüssigen Proben und zur Schwingungsspektroskopie an den Proben gemäß einer exemplarischen Ausführungsform der Erfindung. Der Probenträger 100 weist eine Substratschicht 103 und eine Leiterplatte 101 auf, wobei die Leiterplatte 101 auf der Substratschicht 103 angeordnet ist. Die Substratschicht 103 weißt mehrere Elektroden 104, insbesondere Elektroden 104a zum Anlegen von negativer Ladung und 104b zum Anlegen positiver Ladung, zur elektrischen Manipulation von flüssigen Proben auf. Die Leiterplatte 101 weist elektrische Zuleitungen 106 zu den Elektroden 104 der Substratschicht 103 auf. Weiterhin weißt die Leiterplatte 101 mehrere Ausnehmungen 105 auf, die jeweils zusammen mit der Substratschicht 103 eine Probenkammer bilden. Die Substratschicht 103 in Figur 1 weist eine Quadrupol-Elektrodenstruktur auf. Zur Ausbildung eines Quadrupols sind die Elektroden 104a, 104b abwechselnd angeordnet, d.h. ein Quadrupol weißt vier Elektroden auf 104 auf, insbesondere weist er zwei Elektroden 104a zum Anlegen von negativer Ladung und zwei Elektroden 104b zum Anlegen positiver Ladung auf. Auf der Substratschicht 103 in Figur 1 sind die Elektroden 104 in einer 5 mal 9 Matrix angeordnet. In dieser Anordnung können beispielsweise 32 Quadrupole ausgebildet werden. Beispielsweise, weist die Leiterplatte Ausnehmungen in dem 384 Well-Plate-format auf, dann sind die Elektroden bzw. die Elektrodenstrukturen ebenso in Abständen gemäß dem 384 Well-Plate-Format angeordnet, sodass jeder Ausnehmung eine entsprechende Elektrodenstruktur zugeordnet ist. Die Leiterplatte weist mehrere elektrische Zuleitungen 106 zu den Elektroden 104 der Substratschicht 103 auf. Weiterhin weist die Leiterplatte 101 eine erste Hauptoberfläche 113 und eine zweite Hauptoberfläche (nicht sichtbar) auf. Die zweite Hauptoberfläche liegt der ersten Hauptoberfläche 113 gegenüber und die elektrischen Zuleitungen 106 zu den Elektroden 104 der Substratschicht 103 sind sowohl auf der ersten Hauptoberfläche 113 als auch auf der zweiten Hauptoberfläche angeordnet. Die Substratschicht 103 ist transparent ausgeführt und besteht aus Glas, wobei das Glas insbesondere ein Quarzglas ist. Die Elektroden 104 auf der Substratschicht 103 können zumindest teilweise übereinander angeordnet sein, nicht dargestellt in Figur 1. Dabei kann eine Isolationsschicht zwischen den übereinander angeordneten Elektroden 104 zur Isolation der Elektroden 104 voneinander angeordnet sein, und ferner können die elektrischen Zuleitungen 106 zumindest teilweise auf der Substratschicht angeordnet sein. Somit würde die Substratschicht 103 eine Mehrzahl von Elektroden 104 aufweisen, welche übereinander auf einer Seite der Substratschicht 103 angeordnet sind. Die Mehrzahl von Elektroden 104 können in mehreren Schichten auf einer Seite der Substratschicht 103 angeordnet werden, wobei die Elektrodenschichten 104 direkt übereinander angeordnet und/oder auch versetzt übereinander angeordnet sind, in Abhängigkeit der gewählten Elektrodenformation. Die Elektroden 104 sind insbesondere auf einer Seite der Substratschicht 103 angeordnet, welche der Leiterplatte 101 zugewandt ist, sodass die Elektroden 104 bzw. die Elektrodenschichten sich zwischen der Substratschicht 103 und der Leiterplatte 101 befinden. Alternativ oder zusätzlich können die Elektroden auch auf der Seite der Substratschicht 103 angeordnet werden, welche von der Leiterplatte 101 abgewandt ist. Die Isolationsschicht kann die Verbindungsschicht 102 sein oder die Isolationsschicht ist als zusätzliche Schicht (nicht dargestellt) zwischen der Substratschicht 104 und der Leiterplatte 101 ausgeführt.

Wie in Figur 1 ersichtlich sind auf der ersten Hauptoberfläche 113 die elektrischen Zuleitungen für die positive Ladung angeordnet. Die elektrischen Zuleitungen 106 für die negative Ladung können auf der zweiten Hauptoberfläche, welche hier nicht sichtbar ist, angeordnet werden. Damit überschneiden sich die einzelnen Zuleitungen für die unterschiedlichen Ladungspotenziale nicht und ein inhomogenes Feld für die Dielektrophorese kann zuverlässig aufgebaut werden. Insbesondere überschneiden sich die Zuleitungen 106 bei der Verwendung der Elektroden als Duopol, Tripol, oder Quadrupol in einer Richtung senkrecht zu einer Schichtrichtung der Substratschicht 103 und der Leiterplatte 101 nicht. Die elektrischen Zuleitungen 106 der Leiterplatte 101 erstrecken sich zumindest teilweise durch die Leiterplatte 101. In diesem Sinne erstrecken sich die elektrischen Zuleitungen 106 auf der ersten Hauptoberfläche 113 durch die Leiterplatte. Insbesondere erstrecken sich die elektrischen Zuleitungen 106 von der ersten Hauptoberfläche 113 durch Durchgangslöcher 107 zur zweiten Hauptoberfläche. Die Durchgangslöcher 107 und 108 sind zusätzlich zu den Ausnehmungen 105 auf der Leiterplatte 101 vorgesehen. Mittels der Durchgangslöcher 107 und 108 können die elektrischen Zuleitungen 106 auf der Leiterplatte 101 mit den Elektroden 104 auf der Substratschicht 103 elektrisch verbunden werde. Diese Verbindung kann beispielsweise mittels einer Leitpaste, wie Leitsilber hergestellt werden. Dazu könne die Durchgangslöcher für die elektrischen Zuleitungen leitend beschichtete Innenwände aufweisen, um einen besseren Kontakt durch die Leiterplatte zu gewährleisten. Die Leiterplatte gemäß Figur 1 weist 32 Ausnehmungen auf, welche zusammen mit der Substratschicht 32 Probenkammern formen. Jeder Probekammer ist ein Quadrupol zugeordnet.

Weiterhin ist zwischen der Substratschicht 103 und der Leiterplatte 101 eine Verbindungsschicht 102 angeordnet, diese Verbindungsschicht 102 ist beispielsweise eine Klebeschicht. Die Klebeschicht ist beispielsweise eine zweiseitige Klebefolie. Die Klebeschicht erstreckt sich entlang der kompletten Fläche der Substratschicht 103, sodass die Substratschicht 103 komplett an die Leiterplatte angeklebt wird. Ferner weist die Verbindungsschicht 102 Ausnehmungen 111 auf, welche jeweils einer Ausnehmung 105 der Leiterplatte 101 zugeordnet sind. Somit weist die Verbindungsschicht 102 in Figur 1 32 Ausnehmungen auf, welche jeweils zusammen mit einer Ausnehmung 105 der Leiterplatte 101 und der Substratschicht 103 eine Probenkammer bilden. In anderen Worten erstreckt sich die Probenkammer durch die Leiterplatte 101 und durch die Verbindungsschicht 102 bis zur Substratschicht 103. Weiterhin weist die Verbindungsschicht 102 Löcher bzw. Durchgangslöcher 112 für die elektrischen Zuleitungen 106 auf, welche Zuleitungen sich durch die Leierplatte 101 zur Substratschicht 103 und somit auch durch die Verbindungsschicht 102 erstrecken können. Für jedes Durchgangsloch 108 und 107 in der Leiterplatte 101 ist ein entsprechendes Durchgangsloch 112 in der Verbindungsschicht 102 vorgesehen. Die Substratschicht 103 weist ferner mehrere Zuleitungen zu den Elektroden 104 auf. Ferner weist die Leiterplatte Anschlüsse 109 und 110 zum Einspeisen der elektrischen Ladung, insbesondere zum Einspeisen von Wechselstrom auf.

Figur 2 illustriert einen Probenträger 200 gemäß einer weiteren Ausführungsform der Erfindung. Der Probenträger 200 weist die selbe Konfiguration wie der Probenträger in Figur 1 auf. Lediglich die Anzahl der Probenkammern und somit auch die Anzahl der Quadrupole ist anders. Die Leiterplatte 101 des Probenträgers 200 umfasst 40 Ausnehmungen die jeweils zusammen mit der Substratschicht 101 und den Ausnehmungen 111 der Verbindungsschicht 102 eine Probenkammer bilden. Somit liegen 40 Probenkammer in dem Probenträger 200 vor. Entsprechend sind auf der Substratschicht 103 mittels der Elektroden 104a und 104b 40 Quadrupole zur elektrischen Manipulation der Probe ausgebildet. Die Ausnehmungen sind in vier Gruppen angeordnet, wobei eine Gruppe in einer 2 mal 5 Matrix angeordnet ist. Jeder Reihe ist ein Buchstabe von A bis D zugeordnet und jeder Spalte ist eine Zahl von 1 bis 10 zugeordnet. Somit lässt sich die jeweilige flüssige Probe aus der entsprechenden Probenkammer zuordnen. Somit kann beispielsweise aus Reihe a, Zeile 3 die entsprechende Probe und Probenkammer während der Schwingungsspektroskopischen Analyse zugeordnet werden. Ferner sind für jede Gruppe jeweils Anschlüsse 109 und 110 vorgesehen, damit kann jede Gruppe an Probenkammern mit den zugehörigen Elektroden 104 unterschiedlich angesteuert werden. Entsprechend der Leiterplatten 101 und Substratschicht 103 Konfiguration weist die Verbindungsstruktur 102 jeweilige Ausnehmungen 111 und Durchgangslöcher 112 für die elektrischen Zuleitungen 106 auf.

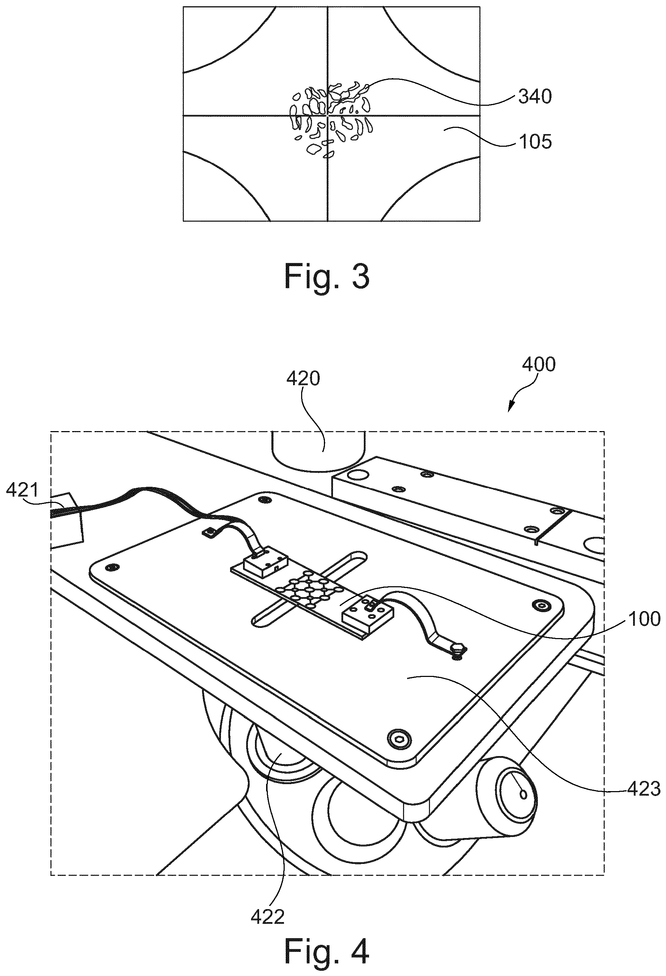

Figur 3 illustriert eine spektroskopische Aufnahme einer Ausnehmung 105 und somit einer Probenkammer, welche eine flüssige Probe 340 enthält. Die Probe 340 wird mittels Dielektrophorese im Zentrum der Probenkammer gefangen, um somit eine Schwingungsspektroskopische Untersuchung der Probe zu ermöglichen.

Figur 4 illustriert ein System 400 zur Schwingungsspektroskopie gemäß einer exemplarischen Ausführungsform der Erfindung. Das System 400 weist ein Schwingungsspektroskop 420 und einen Probenträger 100 (200) auf. Weiterhin weist das System einen Detektor 422 zur Schwingungsspektroskopie auf, wobei der Detektor auf einer Seite des Probenträgers 100 angeordnet ist. Der Detektor 422 ist auf einer Unterseite des Probenträgers 100 angeordnet, das heißt der Detektor wird an der Seite der Substratschicht 103 angeordnet und das Spektrometer 420 auf der Seite der Leiterplatte 101 angeordnet. In anderen Worten wird der Detektor 422 auf einer der Leiterplatte 101 gegenüberliegenden Seite der Substratschicht 103 angeordnet. In Figur 4 ist mittels 422 insbesondere ein Objektivrevolver dargestellt an welchem verschiedene Objektive angebracht sind. Der Detektor ist dem Objektivrevolver nachgelagert und detektiert entsprechende Strahlung durch das ausgewählte Objektiv. Beispielsweise sind in einem inversen Ramanspektroskop sowohl der Detektor als auch das Spektroskop auf ein und derselben Seite des Probenträgers 100 angeordnet, wobei der Detektor und das Spektroskop mittels des Objektivrevolvers 422 verbunden sind. In dieser Ausführungsform stellt 420 eine Auflicht, z.B. eine LED dar, welche für morphologische Untersuchungen verwendbar ist. Bei der Verwendung eines Auflichtes befindet sich zusätzlich auf der Seite des Detektors und des Spektroskops eine Kamera für das Auflicht.

Das System weist ferner Anschlüsse 421 auf, welche zum Einspeisen von Wechselstrom zu dem Probenträger dienen. Diese Anschlüsse 421 sind mittels elektrisch leitfähigen Leitungen mit den Anschlüssen 109 und 110 des Probenträgers 100 verbunden. Der Probenträger 100 wird mittels einer Probenträgerhalterung 423 in dem System gehalten.

Figur 5 illustriert eine Duopol Elektrodenanordnung, wobei in Figur 5 die Ausnehmung 105 mit der flüssigen Probe dargestellt wird. In der Figur sind die Elektroden bzw. die Durchgangslöcher 108 und 107 zu den Elektroden kreisförmig dargestellt. In der vergrößerten Detaildarstellung in Figur 5 ist die Probe 540 innerhalb der Probenkammer dargestellt. Die Probenkammer bzw. die Ausnehmung ist derart geformt, dass sie wie in Figur 5 ersichtlich 4 Seitenarme aufweist, wobei die vier Seitenarme eine Kreuzform ausbilden. In der Duopol Elektrodenanordnung sind die Elektroden 107 und 108 nicht über Kreuz angeschlossen, d.h. zwei Elektroden 107 desselben Potentials sind auf einer Seite der Ausnehmung 105 angeordnet und diesen gegenüber sind zwei Elektroden 108 des anderen Potentials angeordnet. Durch diese Elektrodenanordnung wird die flüssige Probe 540 nicht in der Mitte gesammelt (wie bei einer Quadrupol Anordnung), sondern in einem und oder mehreren der vier Seitenarme der Probenkammer. Vorteilhafterweise werden dadurch mehr Messstellen erhalten, wenn die Probe auf die Seitenarme verteilt wird. Ferner kann das Duopol konstruktiv mehrfach in einer Reihe angeordnet werden, ohne das dazu mehr Zuleitungen notwendig sind. Dadurch wird abermals die Anzahl der Messstellen erhöht.

Figur 6 illustriert eine Duopol-Elektrodenanordnung, wobei zwei Elektroden 104b zur Einspeisung von positiver Ladung und eine Elektrode 104a zur Einspeisung von negativer Ladung dargestellt sind. Ferner werden in Figur 6 die Verbindungen der Elektroden 104 zueinander dargestellt. Die Elektroden eines gleichen Potentials, d.h. Elektroden 104a und Elektroden 104b sind mittels Elektrodenverbindungen 660 untereinander verknüpft. Damit wird an mehrere Elektroden 104a, 104b gleichzeitig das gleiche Potential angelegt. In der vergrößerten Detaildarstellung in Figur 6 wird illustriert, dass die Elektrodenzuleitungen zwar direkt nebeneinander verlaufen, sich jedoch nicht überkreuzen. Ferner illustriert die vergrößerte Detaildarstellung in Figur 6 3 Duopolstrukturen mit jeweils zwei Messstellen. Durch die Duopolanordnung wird die Probe in die Ausnehmung gegeben, werden die Bakterien in der Probe mittels der Duopolanordnung in der flüssigen Probe gleich verteilt. Durch das angelegte elektrische Feld werden die Bakterien beim Absinken auf den Probenkammerboden abgelenkt und (hier beim Duopol) in den Seitenarmen gefangen. Beim Quadrupol werden die Bakterien entsprechend in der Mitte gefangen. Vorteilhafterweise sind die Bereiche zwischen den Duopolregionen V-förmig ausgebildet, damit werden die Feldlinien derart ausgerichtet, dass das Fangen der Bakterien in den Seitenarmen verbessert wird. Ferner sind die einzelnen Duopolstrukturen untereinander mit Abstand angeordnet, um ein gegenseitiges Beeinflussen, wie beispielsweise ein gegenseitiges Abfangen der Bakterien, zu vermeiden.

Figur 7 illustriert einen Pin-Array 731 gemäß einer exemplarischen Ausführungsform der Verbindung, wobei der Pin-Array 731 zur elektronischen Kontaktierung der Elektroden 104 vorgesehen ist. Der Pin-Array 731 kann mittels einem separaten Chip, bzw. einer separaten Leiterplatte gebildet werden. Zur Kontaktierung werden elektrische Pins 730, insbesondere Federkontaktstifte, Federkontaktpins, oder Pogo-Pins verwendet. Die Kontaktierung kann erzeugt werden, indem die Pins 730 die Leiterplatte 101 und die Substratschicht 103 elektrisch verbindet, dabei kann auf die Leitpaste verzichtet werden. Der Pin-Array 731 kann als zusätzliches Element an dem Probenträger 100 oder 200 angeordnet werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können.

### Bezugszeichenliste

- 100, 200: Probenträger
- 101: Leiterplatte
- 102: Verbindungsschicht
- 103: Substrat
- 104: Elektroden (104a, 104b)
- 105: Ausnehmungen Leiterplatte
- 106: Zuleitungen
- 107: Durchgangsloch
- 108: Durchgangsloch
- 109: Anschluss
- 110: Anschluss
- 111: Ausnehmung Verbindungsschicht
- 112: Durchgangsloch
- 113: erste Hauptoberfläche
- 340: Probe
- 400: System
- 420: Schwingungsspektroskop
- 421: Anschluss
- 422: Detektor
- 423: Probenträgerhalterung
- 540: Probe
- 660: Elektrodenverbindung
- 730: Anschlusspins
- 731: Pin-Array

## Patentansprüche

1. Probenträger (100) zur elektrischen Manipulation von flüssigen Proben und zur Schwingungsspektroskopie an den Proben, der Probenträger aufweisend
eine Substratschicht (103),
eine Leiterplatte (101),
wobei die Leiterplatte auf der Substratschicht angeordnet ist,
wobei die Substratschicht mehrere Elektroden (104) zur elektrischen Manipulation von flüssigen Proben aufweist,
wobei die Leiterplatte (101) elektrische Zuleitungen (106) zu den Elektroden der Substratschicht aufweist, und
wobei die Leiterplatte mehrere Ausnehmungen (105) aufweist, die jeweils zusammen mit der Substratschicht (103) eine Probenkammer bilden,
wobei die Elektroden konfiguriert sind zum Generieren eines inhomogenen elektrischen Feldes zur Dielektrophorese.

2. Probenträger gemäß Anspruch 1,
wobei die Elektroden (104) der Substratschicht (103) zumindest teilweise übereinander angeordnet sind,
wobei insbesondere eine Isolationsschicht zwischen den übereinander angeordneten Elektroden (104) zur Isolation der Elektroden voneinander angeordnet ist, und
wobei insbesondere die elektrischen Zuleitungen (106) zumindest teilweise auf der Substratschicht (103) angeordnet sind.

3. Probenträger gemäß einem der vorhergehenden Ansprüche,
wobei die Leiterplatte (101) eine erste Hauptoberfläche (113) und eine zweite Hauptoberfläche aufweist,
wobei die erste Hauptoberfläche (113) gegenüberliegend der zweiten Hauptoberfläche angeordnet ist, und
wobei die elektrischen Zuleitungen (106) der Leiterplatte zu den Elektroden (104) der Substratschicht sowohl auf der ersten Hauptoberfläche (113) als auch auf der zweiten Hauptoberfläche angeordnet sind.

4. Probenträger gemäß einem der vorhergehenden Ansprüche,
wobei die Substratschicht (103) aus Glas besteht, auf oder in dem die Elektroden (104) angeordnet sind, wobei das Glas insbesondere ein Quarzglas ist.

5. Probenträger gemäß einem der vorhergehenden Ansprüche,
wobei die Elektroden (104) der Substratschicht (103) als Duopol, Tripol, und/oder Quadrupol und zur dielektrophoretischen Manipulation der Proben in den Probenkammern ausgeführt sind.

6. Probenträger gemäß Anspruch 5,
wobei pro Probenkammer je ein Duopol, Tripol, oder Quadrupol an Elektroden (104) auf der Substratschicht (103) angeordnet ist.

7. Probenträger gemäß einem der vorhergehenden Ansprüche,
wobei ein Volumen jeder Probenkammer im Bereich von 0,5 bis 50 µl ist.

8. Probenträger gemäß einem der vorhergehenden Ansprüche,
wobei zwischen der Leiterplatte (101) und der Substratschicht (103) eine Verbindungsschicht (102) angeordnet ist.

9. Probenträger gemäß Anspruch 8,
wobei die Verbindungsschicht (102) eine Klebeschicht ist,
wobei die Klebeschicht Ausnehmungen (111) aufweist,
wobei pro Ausnehmung (105) der Leiterplatte je eine Ausnehmung (111) der Klebeschicht angeordnet ist.

10. Probenträger gemäß Anspruch 9,
wobei die Ausnehmungen (111) der Klebeschicht jeweils zusammen mit einer Ausnehmung (105) der Leitplatte (101) und der Substratschicht (103) eine Probenkammer bilden.

11. Probenträger gemäß einem der vorhergehenden Ansprüche,
wobei sich die elektrischen Zuleitungen (106) der Leiterplatte (101) zumindest teilweise durch die Leiterplatte erstrecken.

12. Probenträger gemäß Anspruch 11,
wobei die Leiterplatte (101) mehrere Durchgangslöcher (107, 108) für die elektrischen Zuleitungen aufweist, wobei sich die elektrischen Zuleitungen (106) durch die Durchgangslöcher zu den Elektroden (104) der Substratschicht (103) erstrecken.

13. Probenträger gemäß einem der vorhergehenden Ansprüche,
wobei sich die elektrischen Zuleitungen (106) bei der Verwendung der Elektroden (104) als Duopol, Tripol, und/oder Quadrupol in einer Richtung senkrecht zu einer Schichtrichtung der Substratschicht (103) und der Leiterplatte (101) nicht überschneiden.

14. System (400) zur Schwingungsspektroskopie aufweisend ein Schwingungs-Spektroskop (420), insbesondere ein Ramanspektroskop und/oder ein Infrarotspektroskop und einen Probenträger gemäß Anspruch 1 bis 13.

15. Verfahren zur Herstellung eines Probenträgers (100) zur elektrischen Manipulation von flüssigen Proben und zur Schwingungsspektroskopie an den Proben, das Verfahren aufweisend
Bereitstellen einer Substratschicht (103),
Aufbringen von mehreren Elektroden (104) zur elektrischen Manipulation von flüssigen Proben auf die Substratschicht,
Bereitstellen einer Leiterplatte (101),
Aufbringen von elektrischen Zuleitungen (106) zu den Elektroden der Substratschicht auf die Leiterplatte (101),
Ausbilden von mehreren Ausnehmungen (105) auf der Leiterplatte,
Anordnen der Leiterplatte auf der Substratschicht,
wobei die Ausnehmungen (105) jeweils zusammen mit der Substratschicht eine Probenkammer bilden,
wobei die Elektroden konfiguriert sind zum Generieren eines inhomogenen elektrischen Feldes zur Dielektrophorese.

## Claims

1. A sample carrier (100) for electrical manipulation of liquid samples and for vibrational spectroscopy of the samples, the sample carrier comprising
a substrate layer (103),
a printed circuit board (101),
wherein the printed circuit board is arranged on the substrate layer,
wherein the substrate layer comprises a plurality of electrodes (104) for electrical manipulation of liquid samples,
wherein the printed circuit board (101) comprises electrical leads (106) to the electrodes of the substrate layer, and
wherein the printed circuit board comprises a plurality of recesses (105), each of which, together with the substrate layer (103), forms a sample chamber,
wherein the electrodes are configured to generate an inhomogeneous electric field for dielectrophoresis.

2. Sample carrier according to claim 1,
wherein the electrodes (104) of the substrate layer (103) are arranged at least partially one above the other,
wherein in particular an insulating layer is arranged between the electrodes (104) arranged one above the other to insulate the electrodes from one another, and
wherein, in particular, the electrical leads (106) are arranged at least partially on the substrate layer (103).

3. Sample carrier according to any one of the preceding claims,
wherein the printed circuit board (101) comprises a first main surface (113) and a second main surface,
wherein the first main surface (113) is arranged opposite the second main surface, and
wherein the electrical leads (106) of the printed circuit board to the electrodes (104) of the substrate layer are arranged both on the first main surface (113) and on the second main surface.

4. Sample carrier according to any one of the preceding claims,
wherein the substrate layer (103) is made of glass on or in which the electrodes (104) are arranged, wherein the glass is in particular a quartz glass.

5. Sample carrier according to any one of the preceding claims,
wherein the electrodes (104) of the substrate layer (103) are designed as duopol, tripole, and/or quadrupole and for dielectrophoretic manipulation of the samples in the sample chambers.

6. Sample carrier according to claim 5,
wherein one duopol, tripole or quadrupole of electrodes (104) is arranged on the substrate layer (103) per sample chamber.

7. Sample carrier according to any one of the preceding claims,
wherein a volume of each sample chamber is in the range from 0.5 to 50 µl.

8. Sample carrier according to any one of the preceding claims,
wherein a connection layer (102) is arranged between the printed circuit board (101) and the substrate layer (103).

9. Sample carrier according to claim 8,
wherein the connection layer (102) is an adhesive layer,
wherein the adhesive layer comprises recesses (111),
wherein one recess (111) of the adhesive layer is arranged per recess (105) of the printed circuit board.

10. Sample carrier according to claim 9,
wherein the recesses (111) of the adhesive layer each form a sample chamber together with a recess (105) of the printed circuit board (101) and the substrate layer (103).

11. Sample carrier according to one of the preceding claims,
wherein the electrical leads (106) of the printed circuit board (101) extend at least partially through the printed circuit board.

12. Sample carrier according to claim 11,
wherein the printed circuit board (101) comprises a plurality of through-holes (107, 108) for the electrical leads, wherein the electrical leads (106) extend through the through-holes to the electrodes (104) of the substrate layer (103).

13. A sample carrier according to any one of the preceding claims,
wherein the electrical leads (106) do not overlap in a direction perpendicular to a layer direction of the substrate layer (103) and the printed circuit board (101) when the electrodes (104) are used as duopol, tripole, and/or quadrupole.

14. System (400) for vibrational spectroscopy comprising
a vibrational spectroscope (420), in particular a Raman spectroscope and/or an infrared spectroscope, and a sample carrier according to claims 1 to 13.

15. A method of manufacturing a sample carrier (100) for electrical manipulation of liquid samples and for vibrational spectroscopy on the samples, the method comprising
providing a substrate layer (103),
applying a plurality of electrodes (104) for the electrical manipulation of liquid samples to the substrate layer,
providing a printed circuit board (101),
application of electrical leads (106) to the electrodes of the substrate layer on the printed circuit board (101),
forming a plurality of recesses (105) on the printed circuit board,
arranging the printed circuit board on the substrate layer,
wherein the recesses (105) each form a sample chamber together with the substrate layer,
wherein the electrodes are configured to generate an inhomogeneous electric field for dielectrophoresis.

## Revendications

1. Porte-échantillon (100) pour la manipulation électrique d'échantillons liquides et pour la spectroscopie vibrationnelle des échantillons, le porte-échantillon comportant
une couche de substrat (103),
une carte à circuit imprimé (101),
dans lequel la carte à circuit imprimé est disposée sur la couche de substrat, dans lequel la couche de substrat comporte plusieurs électrodes (104) pour la manipulation électrique d'échantillons liquides,
dans lequel la carte à circuit imprimé (101) comporte des conduites d'alimentation électriques (106) jusqu'aux électrodes de la couche de substrat, et
dans lequel la carte à circuit imprimé comporte plusieurs évidements (105) qui, conjointement avec la couche de substrat (103), forment respectivement une chambre d'échantillon,
dans lequel les électrodes sont configurées pour générer un champ électrique non homogène pour la diélectrophorèse.

2. Porte-échantillon selon la revendication 1,
dans lequel les électrodes (104) de la couche de substrat (103) sont disposées de manière au moins partiellement superposée,
dans lequel en particulier une couche d'isolation est disposée entre les électrodes (104) disposées de manière superposée pour l'isolation des électrodes des uns des autres, et
dans lequel en particulier les conduites d'alimentation électriques (106) sont disposées au moins partiellement sur la couche de substrat (103).

3. Porte-échantillon selon l'une des revendications précédentes,
dans lequel la carte à circuit imprimé (101) comporte une première surface principale (113) et une seconde surface principale,
dans lequel la première surface principale (113) est disposée en face de la seconde surface principale, et
dans lequel les conduites d'alimentation électriques (106) de la carte à circuit imprimé jusqu'aux électrodes (104) de la couche de substrat sont disposées aussi bien sur la première surface principale (113) que sur la seconde surface principale.

4. Porte-échantillon selon l'une des revendications précédentes,
dans lequel la couche de substrat (103) est constituée de verre, sur ou dans lequel les électrodes (104) sont disposées, dans lequel le verre est en particulier un verre de quartz.

5. Porte-échantillon selon l'une des revendications précédentes,
dans lequel les électrodes (104) de la couche de substrat (103) sont réalisées sous forme de dipôle, tripôle et/ou quadripôle et pour la manipulation diélectrophorétique des échantillons dans les chambres d'échantillon.

6. Porte-échantillon selon la revendication 5,
dans lequel, pour chaque chambre d'échantillon, un dipôle, tripôle ou quadripôle est disposé au niveau d'électrodes (104) sur la couche de substrat (103).

7. Porte-échantillon selon l'une des revendications précédentes,
dans lequel un volume de chaque chambre d'échantillon est dans la plage de 0,5 à 50 µl.

8. Porte-échantillon selon l'une des revendications précédentes,
dans lequel une couche de liaison (102) est disposée entre la carte à circuit imprimé (101) et la couche de substrat (103).

9. Porte-échantillon selon la revendication 8,
dans lequel la couche de liaison (102) est une couche d'adhésif,
dans lequel la couche d'adhésif comporte des évidements (111),
dans lequel, pour chaque évidement (105) de la carte à circuit imprimé, un évidement (111) de la couche d'adhésif est disposé.

10. Porte-échantillon selon la revendication 9,
dans lequel les évidements (111) de la couche d'adhésif forment respectivement, conjointement avec un évidement (105) de la carte à circuit imprimé (101) et de la couche de substrat (103), une chambre d'échantillon.

11. Porte-échantillon selon l'une des revendications précédentes,
dans lequel les conduites d'alimentation électriques (106) de la carte à circuit imprimé (101) s'étendent au moins partiellement à travers la carte à circuit imprimé.

12. Porte-échantillon selon la revendication 11,
dans lequel la carte à circuit imprimé (101) comporte plusieurs trous de passage (107, 108) pour les conduites d'alimentation électriques, dans lequel les conduites d'alimentation électriques (106) s'étendent à travers les trous de passage jusqu'aux électrodes (104) de la couche de substrat (103).

13. Porte-échantillon selon l'une des revendications précédentes,
dans lequel les conduites d'alimentation électriques (106), lors de l'utilisation des électrodes (104) en tant que dipôle, tripôle et/ou quadripôle, ne se chevauchent pas dans une direction perpendiculaire à une direction de couche de la couche de substrat (103) et de la carte à circuit imprimé (101).

14. Système (400) de spectroscopie vibrationnelle comportant
un spectroscope vibrationnel (420), en particulier un spectroscope Raman et/ou un spectroscope infrarouge, et un porte-échantillon selon les revendications 1 à 13.

15. Procédé de fabrication d'un porte-échantillon (100) pour la manipulation électrique d'échantillons liquides et pour la spectroscopie vibrationnelle des échantillons, le procédé comportant de
fournir une couche de substrat (103),
appliquer plusieurs électrodes (104) pour la manipulation électrique d'échantillons liquides sur la couche de substrat,
fournir une carte à circuit imprimé (101),
appliquer des conduites d'alimentation électriques (106) aux électrodes de la couche de substrat sur la carte à circuit imprimé (101),
former plusieurs évidements (105) sur la carte à circuit imprimé, disposer la carte à circuit imprimé sur la couche de substrat,
dans lequel les évidements (105) forment respectivement, conjointement avec la couche de substrat, une chambre d'échantillon,
dans lequel les électrodes sont configurées pour générer un champ électrique non homogène pour la diélectrophorèse.
